Europäisches Patentamt

**European Patent Office**

Office européen des brevets

(11) Publication number: **0 172 388**
A2

(12) **EUROPEAN PATENT APPLICATION**

(21) Application number: 85108679.3

(22) Date of filing: 11.07.85

(51) Int. Cl.⁴: **B 01 D 53/04**

(30) Priority: 12.07.84 PL 248743

(43) Date of publication of application:
26.02.86 Bulletin 86/9

(84) Designated Contracting States:
AT BE CH DE FR GB IT LI LU NL SE

(71) Applicant: Gaczkowska, Lucja
ul. Wyzwolenia 106
Wisla(PL)

(72) Inventor: Gaczkowska, Lucja
ul. Wyzwolenia 106
Wisla(PL)

(74) Representative: Finck, Dieter et al,
Patentanwälte v. Füner, Ebbinghaus, Finck Mariahilfplatz
2 & 3
D-8000 München 90(DE)

(54) Apparatus for adsorbing vapours and gases.

(57) An apparatus for absorbing vapours and gases, particularly such which are emitted during the glass-etching process, is composed of a demister (2) connected to a gas absorber (10) through a ventilator (9). The demister (2) comprises a cylindrical tank in which two perforated partitions (3, 4) are placed in a trough (6). Between the partitions (3, 4) an absorptive mass (5) is arranged. The demister (2) has in its cylindrical part an inlet opposite to which a screen (1) is placed, and an outlet (8) in the bottom thereof. The outlet (8) is provided with a conduit, the one end whereof is connected to the sucking side of the ventilator (9) and the second end whereof is placed in the tank at a level higher than that of the bottom of the trough (6). The gas absorber (10) is a rectangular tank in which two partitions (11) are placed, between which an active mass (12) is placed.

The apparatus enables an almost total purification of vapours and gases emitted during the process of glas-setching.

EP 0 172 388 A2

v. F Ü N E R        E B B I N G H A U S        F I N C K

PATENTANWÄLTE        EUROPEAN PATENT ATTORNEYS

MARIAHILFPLATZ 2 & 3, MÜNCHEN 90
POSTADRESSE: POSTFACH 95 01 60, D-8000 MÜNCHEN 95

ŁUCJA GACZKOWSKA                    EPAC-33028.9

July 11, 1985

## TITLE MODIFIED
### see front page

## APPARATUS FOR ABSORBING VAPOURS AND GASES

The invention refers to an apparatus for absorbing vapours and gases, particularly vapours and gases emitted during the etching-process of glass.

Vapours and gases emitted in the process of glass-etching are toxic and therefore cause a deterioration of the natural environment. Till now different kinds of water-washers have been applied for absorbing such vapours and gases.

According to the present invention the apparatus comprises a demister which is connected to a gas absorber through a ventilator. The apparatus is made of an acid-proof material, advantageously of a plastics material (vinidur).

The demister comprises a vertical cylindrical tank with an inlet arranged in a vertical wall of said tank opposite to a screen, and an outlet placed in the centre of the bottom of the tank. Inside the tank are arranged two cylindrical perforated partitions the lower edges whereof are placed in a trough. The trough has a perforated bottom. The inner partition can be taken out from the tank after opening the upper cover thereof. The outer partition and the screen are connected to the tank by ribs. Between the partitions an absorbtion mass is arranged. A conduit extends into the outlet, the other end whereof is connected to the sucking or vacuum side of a ventilator. The end extending into the tank has its opening at a level higher than that of the trough. The tank bottom is also provided with sockets evacuating any condensed liquid.

The gas absorber is a rectangular tank arranged in a lying position and provided with two rectangular perforated partitions between which an active mass is arranged. The gass absorber has an inlet in the centre of a lateral wall and an outlet in the centre of the opposite cone-shaped lateral wall. The inlet is connected to the pressure side of the ventilator.

The apparatus of the present invention enables an almost total purification of the vapours and gases emitted during the process of glass-etching. The screen arranged opposite to the inlet of the vapours and gases into the demister directs them to the whole surface of the tank so that the absorbing mass is effectively utilized.

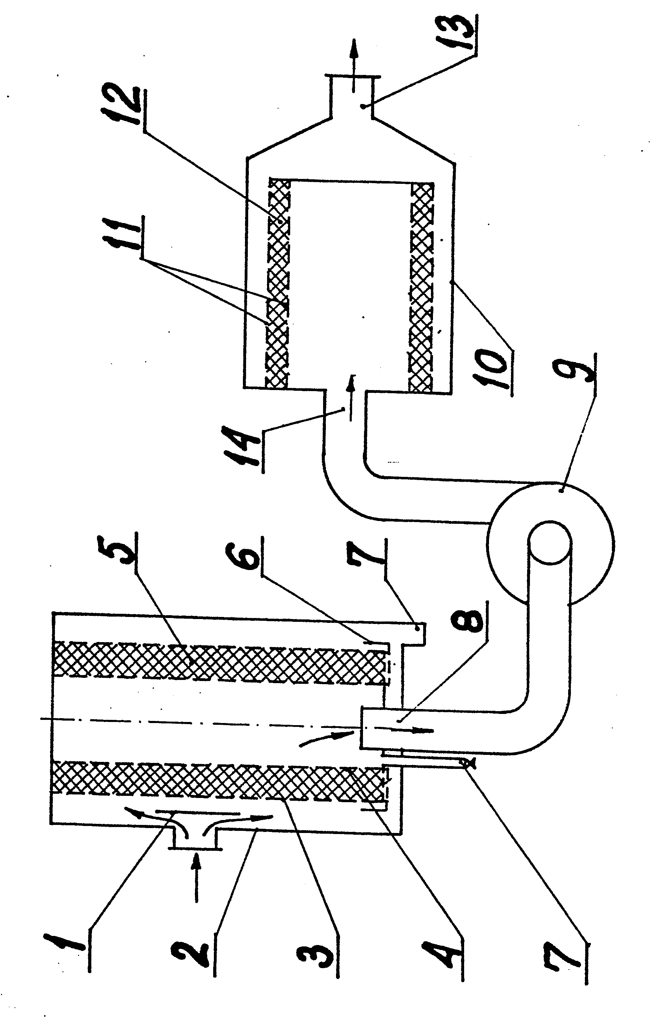

The invention will be further explained with reference to the attached drawing showing a general scheme of an apparatus for absorbing vapours and gases.

The apparatus consists of a demister 2 connected through a ventilator 9 to a gas absorber 10 and is made of plastics material, for instance "vinidur". The demister 2 consists of a cylindrical tank in which two cylindrical perforated partitions 3, 4 are arranged the lower edges whereof are placed in a trough 6. In the cylindrical part of the demister 2 an inlet is arranged opposite to which a screen 1 is situated. The inner partition 4 can be taken out from the tank whereas the outer partition 3 and the screen 1 are connected to the tank by means of ribs. Between the partitions 3, 4 an absorptive mass 5 is arranged. The trough 6 has a perforated bottom.

In the centre of the tank an outlet 8 is arranged in which a conduit is placed. One end of the conduit is connected to the sucking side of a ventilator 9; its second end extends into the tank to a level higher than that of the trough 6. In the tank bottom sockets 7 are arranged for evacuating condensed liquid. The pressure side of the ventilator 9 is connected to the inlet 14 of a gas absorber 10. The gas absorber 10 consists of a rectangular tank having therein two perforated partitions 11 between which an active material 12 is arranged. The inlet 14 of the gas absorber 10 is arranged in the centre of a lateral wall; the outlet 13 is arranged in the centre of the opposite cone-shaped lateral wall.

During the operation of the apparatus vapours and gases emitted during the process of glass-etching are drawn in by means of suction nozzles placed above the pickling-solution to the demister 2. Next, when passed through the absorptive mass 5 the gases are sucked in by the ventilator 9 and are pressed into the gas absorber 10.

Any vapours condense on the absorptive mass 5; the arising liquid is evacuated by the sockets 7. In the absorber 10 the gases pass through the active mass 12 and are leaving through the outlet 13 in order to be purified in a known water-washer.

## C L A I M S

1. Apparatus for absorbing vapours and gases, particularly vapours and gases emitted during the process of glass-etching, comprising a ventilator (9), c h a r a c t e r i z e d in that it comprises a demister (2) connected through the ventilator (9) to a gas absorber (10), the demister (2) having a cylindrical tank in which two perforated cylindrical partitions (3, 4) are placed in a trough (6) and having an inlet in the cylindrical part thereof opposite to which a screen (1) is placed, and an outlet (8) arranged in the centre of the bottom of the tank, and in that the gas absorber (10) comprises a lying rectangular tank having an inlet (14) in a first lateral wall and an outlet (13) in a second, cone-shaped lateral wall opposite to the first lateral wall, and two perforated rectangular partitions (11) inside the rectangular tank.

2. Apparatus according to claim 1, c h a r a c t e r i z e d in that the trough (6) has a perforated bottom.

3. Apparatus according to claim 1, c h a r a c t e r -

i z e d in that an absorptive mass (5) is arranged between the partitions (3, 4).

4. Apparatus according to claim 1, c h a r a c t e r - i z e d in  that an active mass (12) is arranged between the partitions (11) of the absorber (10).

5. Apparatus according to claim 1, c h a r a c t e r - i z e d in that the outlet (8) of the demister (2) is provided with a conduit having a first end connected to the sucking side of the ventilator (9) and a second end extending into the tank to a level higher than that of the bottom of the trough (6).

6. Apparatus according to claim 1, c h a r a c t e r - i z e d in that sockets (7) are arranged in the bottom of the tank for evacuating condensed liquid.

7. Apparatus according to claim 1, c h a r a c t e r - i z e d in that the outer partition (3) and the screen (1) of the demister (2) are fixed to the tank by means of ribs, and in that the inner partition (4) is removable from the tank.

8. Apparatus according to claim 1 or 5, c h a r a c - t e r i z e d in that the demister (2), the gas absorber (10), the conduit and the ventilator (9) are made of an acid-proof material, preferably a plastics material (vinidur).

0172388